# EUROPÄISCHE PATENTSCHRIFT

(11) **EP 3 119 972 B1**
(45) Veröffentlichungstag und Bekanntmachung des Hinweises auf die Patenterteilung: **28.02.2018**
(21) Anmeldenummer: 15710718.6
(22) Anmeldetag: 17.03.2015
(51) Int. Cl.: E06B 3/22, E06B 3/263, B29C 47/06, B29C 47/00, B29K 105/08, B29K 105/12

(54) **HOHLKAMMERPROFIL, INSBESONDERE FENSTER- ODER TÜR-HOHLKAMMERPROFIL**
HOLLOW-CHAMBER SECTION, IN PARTICULAR A HOLLOW-CHAMBER SECTION FOR WINDOWS OR DOORS
PROFILÉ À CHAMBRES CREUSES, EN PARTICULIER PROFILÉ À CHAMBRES CREUSES POUR FENÊTRES OU PORTES

(30) Priorität: 20.03.2014 DE 202014101275 U
(43) Veröffentlichungstag der Anmeldung: 25.01.2017
(73) Patentinhaber: REHAU AG + Co, 95111 Rehau (DE)
(72) Erfinder: FINK, Norbert, 90542 Eckental (DE); AL-SHEYYAB, Ahmad, 95111 Rehau (DE)
(86) Internationale Anmeldenummer: PCT/EP2015/000585
(87) Internationale Veröffentlichungsnummer: WO 2015/139834

(56) Entgegenhaltungen:
- EP-A2- 0 672 518
- DE-A1-102007 039 009
- DE-A1-102009 051 058
- US-A1- 2008 148 679

## Beschreibung

Die Erfindung betrifft ein Hohlkammerprofil, insbesondere Fenster- oder Tür-Hohlkammerprofil, mit
- einem extrudierten Profilkörper aus Kunststoff, der mehrere Hohlkammerwandungen aufweist,
- wobei die Hohlkammer-Wandungen mehrere Hohlkammern bilden und
- wobei die Hohlkammer-Wandungen, vorzugsweise bereichsweise, mit Kurzfasern faserverstärkt sind.

Ein derartiges Hohlkammerprofil ist beispielsweise aus der DE 10 2007 039 009 A1 bekannt. Die Faserverstärkung von extrudierten Fensterprofilen mit Kurzfasern, insbesondere Kurzglasfasern, hat sich in der Praxis bewährt. Mithilfe der Faserarmierung können die mechanischen Eigenschaften der Profile nachhaltig verbessert werden. Dies hat zur Folge, dass in vielen Fällen die sonst übliche Armierung der Profile mit metallischen Einschubprofilen entfallen kann, wodurch die Wärmedämmeigenschaften des fertig hergestellten Fensters nachhaltig verbessert werden können

Im Stand der Technik ist es ferner bekannt, Hohlkammerprofile mit bandförmigen Armierungselementen mechanisch zu verstärken, wobei diese bandförmigen Armierungselemente beispielsweise aus einem Organoblech bestehen können. Ein derartiger Stand der Technik ist in der WO 2011/050899 beschrieben. Bei einem Organoblech handelt es sich um ein bandförmiges Faser-Matrix-Halbzeug aus einer Basis-Kunststoff-Matrix. in die Verstärkungsfasern integriert sind. Folglich enthält ein Organoblech bereits ein Kunststoffmaterial, in das die beispielsweise endlosen Fasern eingebettet sind. Organobleche können die mechanische Stabilität von Hohlkammerprofilen nachhaltig verbessern, sind jedoch vergleichsweise teuer.

Aus der WO 2011/092409 ist es bekannt, extrudierte Hohlkammerprofile bereichsweise mit endlosen Fasersträngen zu armieren, welche beispielsweise in entsprechenden Eckbereichen des Hohlkammer-Profils angeordnet sind.

Die Druckschriften EP 0 672 518 A2, US 2008/148679 A1 und DE 10 2009 051058 A1 zeigen Profile, die sowohl mit Kurz- als auch mit Langfasern armiert sind. Die EP 0 672 518 A2 offenbart dabei alle Merkmale des Oberbegriffs des Anspruchs 1.

Der Erfindung liegt die Aufgabe zu Grunde, ein Hohlkammerprofil mit den eingangs beschriebenen Merkmalen anzugeben, dessen mechanische Eigenschaften gegenüber dem Stand der Technik verbessert sind und welches sich gleichzeitig kostengünstig herstellen lässt.

Erfindungsgemäß wird die Aufgabe durch die Merkmale des Patentanspruchs 1 gelöst. Kurzfasern im Rahmen der Erfindung meint insbesondere Fasern mit einer durchschnittlichen Faserlänge von maximal fünf Millimetern, z.B. maximal zwei Millimetern, insbesondere maximal einem Millimeter. Derartige Kurzfasern, wie sie beispielsweise in der bereits erwähnten DE 10 2007 039 009 A1 genannt sind, verstärken das Hohlkammerprofil insbesondere auch quer zur Profillängsrichtung. Entsprechend können Kräfte quer zur Extrusionsrichtung, welche beim Gebrauch der Hohlkammerprofile vorliegen (z.B. Gravitationskräfte durch das Eigengewicht on Fenstern) bzw. entstehen, durch die Kurzfasern besonders gut aufgenommen werden. Beim Einsatz von Langfasern, wie beispielsweise in der WO 2011/092409 A1 beschrieben, erfolgt hingegen insbesondere eine Verbesserung der mechanischen Eigenschaften in Profillängsrichtung. Langfasern im Rahmen der Erfindung meint insbesondere Fasern, welche sich entlang der gesamten Länge des Hohlkammerprofils erstrecken, also Endlosfasern darstellen. Allgemein ist im Rahmen der Erfindung von einer Langfaser zu sprechen, sofern diese mehrere Zentimeter, z.B. mindestens 10 cm, insbesondere auch mehr als ein Meter, beispielsweise mehrere Meter lang ist. Als Fasermaterialien kommen für die Lang- und/oder Kurzfasern insbesondere Glas- und/oder Kohle- und/oder Aramidfasern zum Einsatz. Als Kunststoff des extrudierten Profilkörpers wird vorzugsweise Polyvinylchlorid (PVC), Polyamid (PA), Polypropylen (PP), Polyethylen (PE), Polybutylenterephthalat (PBT), Polyetylenterephthalat (PET) oder aber auch Polyphenylensulfit (PPS) sowie Mischungen der vorgenannten Materialien zum Einsatz kommen. Erfindungsgemäß werden nun also die Vorzüge von Kurzglasfasern, die sich insbesondere in einer Verbesserung der mechanischen Eigenschaften quer zur Profillängsrichtung äußern, mit einer Armierung durch Langfasern kombiniert, welche vor allem die mechanischen Eigenschaften in Profillängsrichtung verbessern. Hierdurch können die Vorzüge beider Armierungsmethoden optimal aufeinander abgestimmt werden und es ist möglich, insgesamt ein mechanisch hoch belastbares Profil bereitzustellen, wobei gleichzeitig aufgrund des somit möglichen, effektiven Einsatzes von Lang- und Kurzfasern in deren Kombination ein möglichst geringer Bedarf an vergleichsweise teurerem Fasermaterial besteht, um die gewünschten mechanischen Eigenschaften bereit zu stellen. Die direkte Einbettung, also Integration der Langfasern in die Kunststoffmatrix des Hohlkammerprofils erlaubt ferner eine vergleichsweise kostengünstige Fertigung. Die im Anspruch 1 der Erfindung genannte direkte Einbettung der Langfasern in die Kunststoff-Matrix der Hohlkammer-Wandungen meint, dass die Langfasern nicht - wie dies beispielsweise bei einem Organoblech der Fall ist - bereits in eine Matrix integriert sind und dann als vorgefertigtes Halbzeug in das Werkzeug des entsprechenden Extrusionsprozess einlaufen, sondern vielmehr stattdessen pure Langfasern in die Kunststoffmatrix des extrudierten Profilkörpers integriert werden.

Im Rahmen der Erfindung liegt es insbesondere, dass die Langfasern in den mit Kurzfasern faserverstärkten Bereich der Hohlkammer-Wandungen eingebettet sind. Folglich existieren in diesem Fall zweckmäßigerweise im Hohlkammerprofil mit Lang- beziehungsweise Kurzfasern armierte Bereiche neben unarmierten Sektionen. Alternativ hierzu ist es auch möglich, dass die Langfasern in den nicht faserverstärkten Bereich der Hohlkammer-Wandungen eingebettet sind.

Zweckmäßigerweise sind die Langfasern in Form von mindestens einer bandförmigen Armierungslage in die Kunststoff-Matrix der Hohlkammer-Wandungen eingebettet. Diese bandförmige Armierungslage kann beispielsweise in der Gebrauchsposition des Hohlkammerprofils senkrecht ausgerichtet sein, so dass insbesondere die durch das Eigengewicht des Hohlkammerprofils mit den gegebenenfalls damit verbundenen Komponenten, zum Beispiel Glasscheiben, hervorgerufenen Kräfte von der bandförmigen Armierungslage besonders gut aufgenommen werden können.

Vorzugsweise ist die Breite der bandförmigen Armierungseinlage mindestens doppelt, zweckmäßigerweise mindestens viermal so groß wie deren Stärke. Als vorteilhaft hat sich ferner herausgestellt, dass die bandförmige Armierungslage parallel zur nächstgelegenen Außenwandung des Profilkörpers angeordnet ist.

Alternativ oder auch ergänzend zur wandförmigen Armierungseinlage liegt es im Rahmen der Erfindung, dass die Langfasern im Form von mindestens einem Armierungstrang mit zumindest im wesentlichen kreisförmigen Querschnitt in die Kunststoff-Matrix der Hohlkammer-Wandungen eingebettet sind. Dieser Armierungsstrang kann beispielsweise in Verbindungsbereichen von zwei oder mehreren Hohlkammer-Wandungen angeordnet sein, aber auch alternativ oder ergänzend hierzu deutlich außerhalb der Eckbereiche. Im Rahmen der Erfindung liegt es insbesondere auch, dass bei einem Hohlkammerprofil der mindestens eine beschriebene Armierungsstrang mit der zuvor beschriebenen mindestens einen bandförmigen Armierungslage kombiniert wird.

Erfindungsgemäß weisen die Hohlkammer- Wandungen insgesamt einen mit Kurzfasern faserverstärken Kernbereich auf, der von einem unverstärkten Außenbereich ummantelt ist. Hierdurch ist es möglich, dass das äußere Erscheinungsbild des Hohlkammerprofils durch die Integration von Fasern in die Kunststoffmatrix keine Beeinträchtigung erfährt, da eine einwandfreie äußere Oberfläche aus unverstärkten Kunststoffmaterial erzeugt wird. Dies gilt insbesondere für den Fall, dass die Langfasern in den mit Kurzfasern faserverstärkten Kernbereich des Hohlkammerprofils integriert sind. Ferner sind erfindungsgemäß die Langfasern im Übergangsbereich von Kern- und Außenbereich angeordnet. Zweckmäßig kann es hierbei insbesondere sein, das die Langfasern an einer Grenze zwischen Kern- und Außenbereich angeordnet sind. Hieraus ergeben sich insbesondere mechanische aber auch fertigungstechnische Vorteile.

Die erfindungsgemäße Lehre kommt insbesondere bei Fenster- oder Tür-Hohlkammerprofilen zum Einsatz, wobei das entsprechende Hohlkammerprofil als Flügelrahmenprofil oder aber alternativ als Blendrahmenprofil ausgebildet sein. Im Folgenden wird die Erfindung lediglich an ein Ausführungsbeispiel darstellenden Zeichnung ausführlich erläutert. Es zeigen schematisch:
- Figur 1a, b: einen Querschnitt durch ein erfindunsgemäßes Hohlkammerprofil und
- Figur 2a, b: eine alternative Ausführungsform der Erfindung

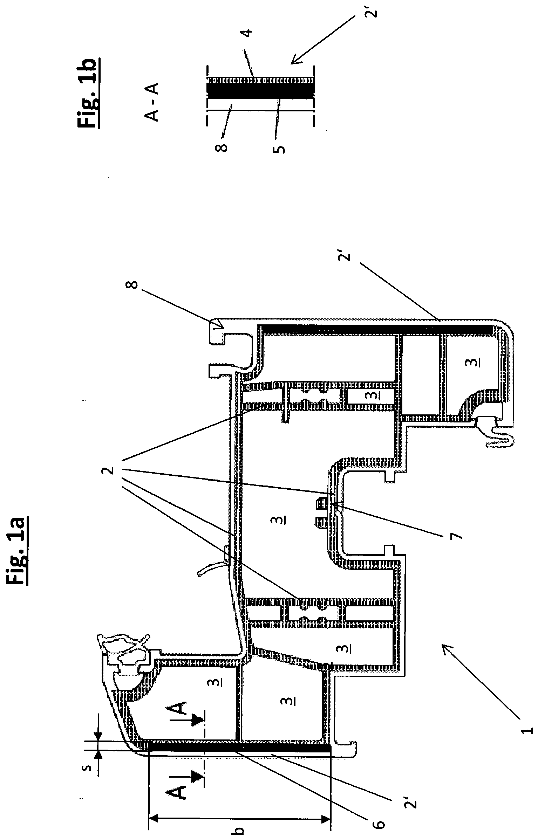

Die Figur 1a zeigt ein Hohlkammerprofil, welches als Flügelrahmenprofil für ein Fenster oder eine Tür ausgebildet ist. Dieses Hohlkammerprofil weist einen extrudierten Profilkörper 1 aus Kunststoff auf, der mehrere Hohlkammer-Wandungen 2, 2' besitzt. Die Hohlkammer-Wandungen 2 bilden mehrere Hohlkammern 3. Ferner ist durch die Schraffur in Fig. 1a angedeutet, dass die Hohlkammer-Wandungen 2 bereichsweise mit Kurzfasern 4 faserverstärkt sind (s.a. Fig.1b, die den Schnitt A-A in Fig.1a zeigt). Die Hohlkammer-Wandungen 2 sind nun an der Außen- beziehungsweise Innenseite des Flügelrahmenprofils zusätzlich mit Langfasern 5 in Form von Endlosfasern faserverstärkt. Diese Langfasern 5 sind direkt in die Kunststoff-Matrix der entsprechenden Hohlkammer-Wandung 2' eingebettet. Insbesondere anhand einer gemeinsamen Betrachtung der Fig. 1a mit der Fig.1b, welche den Schnitt A-A in Fig. 1a zeigt, ist erkennbar, dass die Langfasern 5 in den mit Kurzfasern 4 verstärkten Bereich der entsprechenden Hohlkammer-Wandung 2' eingebettet sind. Beim Ausführungsbeispiel gemäß den Figuren 1a, b sind die Langfasern 5 in Form von zwei bandförmigen Armierungslagen 6 in die Kunststoff-Matrix der entsprechenden Hohlkammer-Wandungen 2' eingebettet. Die Bandbreite b ist hierbei mindestens viermal so groß wie die Bandstärke s. Ferner sind die bandförmigen Armierungslagen 6 parallel zur nächstgelegenen Außenwandung des Profilköpers 1 angeordnet. Einer gemeinsamen Betrachtung der Fig. 1a und 1b ist ferner zu entnehmen, dass die Hohlkammer-Wandungen 2,2' insgesamt einen mit Kurzfasern 4 faserverstärkten Kernbereich 7 aufweisen, der von einem unverstärkten Außenbereich 8 ummantelt ist. Die bandförmigen Armierungslagen 6 sind unmittelbar an der Grenze zwischen Kernbereich 7 und Außenbereich 8 angeordnet.

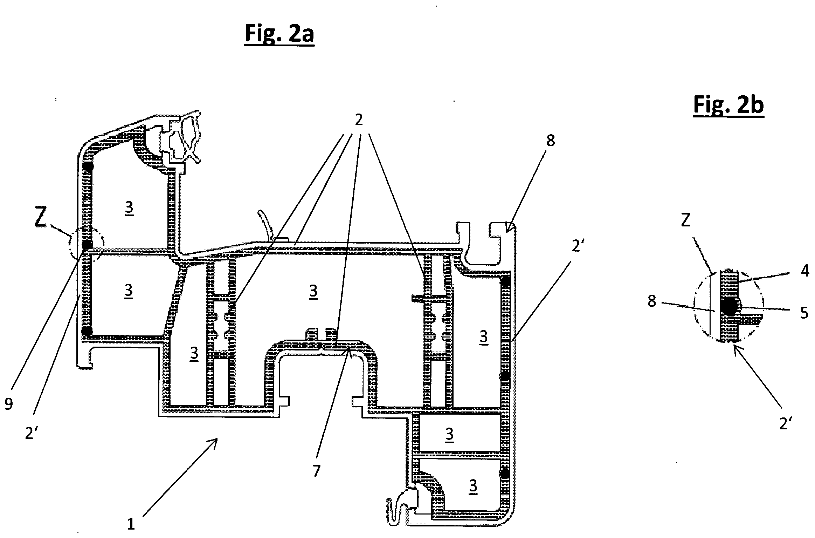

Beim Ausführungsbeispiel gemäß Fig.2a bzw. 2b sind die Langfasern 5 in Form von mehreren Armierungssträngen 9 in die Kunststoff-Matrix der Hohlkammer-Wandungen 2' eingebettet, wobei auch hier eine Einbettung in den bereits mit Kurzfasern 4 verstärkten Bereich der Hohlkammer-Wandungen 2' erfolgte. Die Armierungsstränge 9 weisen einen kreisförmigen Querschnitt auf und sind beispielsweise, wie im in der Fig. 2b gezeigten Ausschnitt Z der Fig. 2a vergrößert dargestellt ist, in einem Eckbereich angeordnet, in dem zwei Hohlkammer-Wandungen 2', 2 aufeinander treffen. Zusätzlich zeigt die Fig. 2a jedoch auch Armierungsstränge 9, welche in von Eckbereichen beanstandenden Sektionen angeordnet sind. Es versteht sich, dass sowohl die Anordnung aller Armierungsstränge 9 in Eckbereichen als auch die Anordnung aller Armierungsstränge 9 außerhalb der Eckbereiche im Rahmen der Erfindung liegt.

Im Rahmen der Erfindung liegt es selbstverständlich ferner, dass die in der Fig. 1a, b bzw. Figur 2a, b dargestellten Langfasern 5 in bandförmiger Gestaltung 6 einerseits und strangförmiger Gestaltung 9 andererseits miteinander kombiniert werden, um optimale mechanische Eigenschaften zu gewährleisten. Ferner liegt es selbstverständlich ebenfalls im Rahmen der Erfindung, dass neben den in den Figuren dargestellten Flügelrahmenprofilen für Fenster bzw. Türen auch entsprechende Blendrahmenprofile analog mit Langfasern 5 armiert werden können.

## Patentansprüche

1. Hohlkammerprofil, insbesondere Fenster- oder Tür-Hohlkammerprofil, mit
- einem extrudierten Profilkörper (1) aus Kunststoff, der mehrere Hohlkammer-Wandungen (2,2') aufweist,
- wobei die Hohlkammer-Wandungen (2,2') mehrere Hohlkammern (3) bilden und
- wobei die Hohlkammer-Wandungen (2,2'), vorzugsweise bereichsweise, mit Kurzfasern (4) faserverstärkt sind und
- wobei die Hohlkammer-Wandungen (2') bereichsweise zusätzlich mit Langfasern (5), insbesondere Endlosfasern, faserverstärkt sind, die direkt in die Kunststoff-Matrix der Hohlkammer-Wandungen (2') eingebettet sind,
**dadurch gekennzeichnet, dass** die Hohlkammer-Wandungen (2,2') insgesamt einen mit Kurzfasern (4) faserverstärkten Kernbereich (7) aufweisen, der von einem unverstärkten Außenbereich (8) ummantelt ist und dass die Langfasern (5) im Übergangsbereich von Kernbereich (7) und Außenbereich (8) angeordnet sind.

2. Hohlkammerprofil nach Anspruch 1, **dadurch gekennzeichnet, dass** die Langfasern (5) in den mit Kurzfasern (4) faserverstärkten Bereich der Hohlkammer-Wandungen (2') eingebettet sind.

3. Hohlkammerprofil nach Anspruch 1 oder 2, **dadurch gekennzeichnet, dass** die Langfasern (5) in den nicht faserverstärkten Bereich der Hohlkammer-Wandungen (2') eingebettet sind.

4. Hohlkammerprofil nach einem der Ansprüche 1 bis 3, **dadurch gekennzeichnet, dass** die Langfasern (5) in Form von mindestens einer bandförmigen Armierungslage (6) in die Kunststoff-Matrix der Hohlkammer-Wandungen (2') eingebettet sind.

5. Hohlkammerprofil nach Anspruch 4, **dadurch gekennzeichnet, dass** die Breite (b) der bandförmigen Armierungseinlage (6) mindestens doppelt, zweckmäßigerweise mindestens viermal so groß ist wie deren Stärke (s).

6. Hohlkammerprofil nach Anspruch 4 oder 5, **dadurch gekennzeichnet, dass** die bandförmige Armierungslage (6) parallel zur nächstgelegenen Außenwandung des Profilkörpers (1) angeordnet ist.

7. Hohlkammerprofil nach einem der Ansprüche 1 bis 6, **dadurch gekennzeichnet, dass** die Langfasern (5) in Form von mindestens einem Armierungsstrang (9) mit zumindest im Wesentlichen kreisförmigem Querschnitt in die Kunststoff-Matrix der Hohlkammer-Wandungen (2') eingebettet sind.

8. Hohlkammerprofil nach einem der Ansprüche 1 bis 7, **dadurch gekennzeichnet, dass** die Langfasern (5) an einer Grenze zwischen Kernbereich (7) und Außenbereich (8) angeordnet sind.

## Claims

1. Hollow-chamber section, in particular a hollow chamber section for windows or doors, with
- an extruded section body (1) made of plastic, which comprises multiple hollow-chamber walls (2, 2'),
- wherein the hollow-chamber walls (2, 2') form multiple hollow chambers (3), and
- wherein the hollow-chamber walls (2, 2') are fiber-reinforced with short fibers (4), preferably in regions, and
- wherein the hollow-chamber walls (2') are additionally fiber-reinforced with long fibers (5), in particular continuous fibers, in regions, which are directly embedded in the plastic matrix of the hollow-chamber walls (2'),
**characterized in that** the hollow-chamber walls (2, 2') altogether comprise a core area (7), fiber-reinforced with short fibers (4), which is encased by a non-reinforced outer area (8), and **in that** the long fibers (5) are arranged in the transition area of core area (7) and outer area (8).

2. Hollow-chamber section according to claim 1, **characterized in that** the long fibers (5) are embedded in the region of the hollow-chamber walls (2') fiber-reinforced with short fibers (4).

3. Hollow-chamber section according to claim 1 or 2, **characterized in that** the long fibers (5) are embedded in the non-fiber-reinforced region of the hollow-chamber walls (2').

4. Hollow-chamber section according to one of the claims 1 to 3, **characterized in that** the long fibers (5) are embedded in the plastic matrix of the hollow-chamber walls (2') in the form of at least one strip-shaped reinforcement layer (6).

5. Hollow-chamber section according to claim 4, **characterized in that** the width (b) of the strip-shaped reinforcement layer (6) is at least two times, expediently at least four times as great as the height (s) thereof.

6. Hollow-chamber section according to claim 4 or 5, **characterized in that** the strip-shaped reinforcement layer (6) is arranged parallel to the closest outer wall of the section body (1).

7. Hollow-chamber section according to one of claims 1 to 6, **characterized in that** the long fibers (5) in the form of at least one reinforcement strand (9) having an at least substantially circular cross-section are embedded in the plastic matrix of the hollow-chamber walls (2').

8. Hollow-chamber section according to one of the claims 1 to 7, **characterized in that** the long fibers (5) are arranged at a boundary between core area (7) and outer area (8).

## Revendications

1. Profilé à chambres creuses, notamment profilé à chambres creuses pour fenêtres ou portes, comprenant
- un corps de profilé (1) extrudé, en matière plastique, lequel présente plusieurs parois (2, 2') de chambres creuses,
- les parois (2, 2') de chambres creuses formant plusieurs chambres creuses (3), et
- les parois (2, 2') de chambres creuses étant renforcées par fibres, de préférence par sections, avec des fibres courtes (4), et
- les parois (2, 2') de chambres creuses étant en outre renforcées par fibres par sections, avec des fibres longues (5), notamment des fibres continues, qui sont directement enrobées dans la matrice en matière plastique des parois (2, 2') de chambres creuses,
**caractérisé en ce que** les parois (2, 2') de chambres creuses présentent en tout une zone centrale (7) renforcée par fibres avec des fibres courtes (4), laquelle est entourée par une zone extérieure (8) non renforcée, et **en ce que** les fibres longues (5) sont disposées dans la zone de transition entre la zone centrale (7) et la zone extérieure (8).

2. Profilé à chambres creuses selon la revendication 1, **caractérisé en ce que** les fibres longues (5) sont enrobées dans les parois (2') de chambres creuses renforcées par fibres avec des fibres courtes (4).

3. Profilé à chambres creuses selon la revendication 1 ou 2, **caractérisé en ce que** les fibres longues (5) sont enrobées dans la zone non renforcée par fibres des parois (2') de chambres creuses.

4. Profilé à chambres creuses selon l'une quelconque des revendications 1 à 3, **caractérisé en ce que** les fibres longues (5) sont enrobées dans la matrice en matière plastique des parois (2') de chambres creuses sous forme d'au moins une couche de renforcement (6) en forme de bande.

5. Profilé à chambres creuses selon la revendication 4, **caractérisé en ce que** la largeur (b) de la couche de renforcement (6) en forme de bande est d'au moins deux fois, de manière utile d'au moins quatre fois son épaisseur (s).

6. Profilé à chambres creuses selon la revendication 4 ou 5, **caractérisé en ce que** la couche de renforcement (6) en forme de bande est disposée parallèlement à la paroi extérieure la plus proche du corps de profilé (1).

7. Profilé à chambres creuses selon l'une quelconque des revendications 1 à 6, **caractérisé en ce que** les fibres longues (5) sont enrobées dans la matrice en matière plastique des parois (2') de chambres creuses sous forme d'au moins un boyau de renforcement (6) ayant au moins essentiellement une section transversale circulaire.

8. Profilé à chambres creuses selon l'une quelconque des revendications 1 à 7, **caractérisé en ce que** les fibres longues (5) sont disposées sur une limite entre la zone centrale (7) et la zone extérieure (8).
